# NEUE EUROPÄISCHE PATENTSCHRIFT

(11) **EP 3 591 427 B2**
(45) Veröffentlichungstag und Bekanntmachung des Hinweises auf die Entscheidung über den Einspruch: **25.02.2026**
(45) Hinweis auf die Patenterteilung: 14.06.2023
(21) Anmeldenummer: 18181987.1
(22) Anmeldetag: 05.07.2018
(51) Int. Cl.: G01S 3/78, G01S 7/495, F41H 11/02

(54) **FLUGKÖRPERWARNER UND EIN VERFAHREN ZUM WARNEN VOR EINEM FLUGKÖRPER**
MISSILE ALERTER AND A METHOD FOR ISSUING A WARNING ABOUT A MISSILE
AVERTISSEUR MISSILE ET PROCÉDÉ D'AVERTISSEMENT CONTRE UN MISSILE

(43) Veröffentlichungstag der Anmeldung: 08.01.2020
(73) Patentinhaber: HENSOLDT Sensors GmbH, 82024 Taufkirchen (DE)
(72) Erfinder: Assel, Michael, 86438 Kissing (DE)
(74) Vertreter: LifeTech IP Spies & Behrndt Patentanwälte PartG mbB

(56) Entgegenhaltungen:
- EP-A1- 2 911 092
- WO-A2-2006/083278
- WO-A2-2007/056753
- US-A- 5 686 889
- US-A1- 2013 235 211
- US-A1- 2014 086 454
- US-A1- 2016 132 499

## Beschreibung

Die vorliegende Erfindung bezieht sich auf einen Flugkörperwarner und auf ein Verfahren zum Warnen vor einem Flugkörper und insbesondere auf einen passiven optischen Flugkörperwarner unter Nutzung von zwei Spektralbereichen.

### HINTERGRUND DER ERFINDUNG

Flugkörperwarner sind ein notwendiger Teil von Selbstschutzsystemen (z.B. von Flugzeugen), deren primäre Aufgabe in der Detektion und Deklaration von Flugkörpern liegt. Da solche Flugkörper eine potentielle Gefahr für einen Träger (z.B. ein bewegtes oder unbewegtes Objekt) darstellen können, erfolgt bei einer Detektion eine Meldung an ein entsprechendes übergeordnetes System, um entsprechende Gegenmaßnahmen einleiten zu können.

Passive Flugkörperwarnsysteme können beispielsweise auf optischen Signalen basieren - zum Beispiel durch ein Detektieren des heißen Abgasstrahls des Flugkörpers. Hierzu kann beispielsweise eine oder mehrere ortsauflösende Kameras genutzt werden, die in einem speziellen Spektralbereich arbeiten. Grundsätzlich detektieren solche Kameras jedoch alle Objekte, die sich in einem Erfassungsraum befinden und eine Signatur im Spektralbereich der Kamera besitzen. Darunter sind häufig eine Vielzahl von nichtbedrohlichen Quellen, wie beispielsweise ein Feuer, Halogenlampen oder auch Flugkörper, die den eigenen Träger nicht treffen würden. Die eigentliche Bedrohung besteht vielmehr in Flugkörpern, die sich auf den jeweiligen Träger zubewegen und daher prinzipiell eine Bedrohung darstellen können.

Eine Unterscheidung zwischen bedrohlichen Quellen und nichtbedrohlichen Quellen erfolgt innerhalb eines Klassifikators. Dazu werden beispielsweise charakteristische Merkmale genutzt (z.B. ein Intensitätsverlauf), die zu der betreffenden Quelle gehören. Als Resultat der Klassifizierung werden nur tatsächliche Bedrohungen erkannt und für weitere Gegenmaßnahmen an ein entsprechendes Selbstschutzsystem des Trägers und/oder dem Piloten gemeldet.

Bei der Justage des Klassifikators ist typischerweise ein Kompromiss zu finden zwischen einer niedrigen Falschalarmrate (FAR) und einer maximalen Deklarationswahrscheinlichkeit von Bedrohungen (POD).

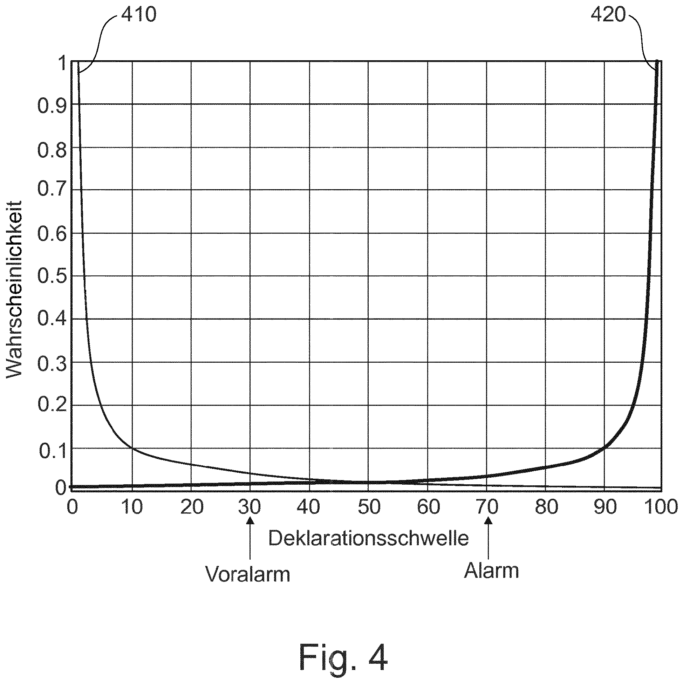

**Fig. 4** veranschaulicht den schematischen Zusammenhang zwischen der Falschalarmrate (FAR) und der Deklarationswahrscheinlichkeit der Bedrohung (POD). In einem erster Graph 410 sind nichtbedrohlichen Objekten gezeigt, die fälschlicherweise als ein Alarm deklariert wurden. Sie stellen somit die Falschalarmwahrscheinlichkeit (FAR) dar. Ein zweiter Graph 420 sind bedrohliche Objekte, die nicht als Alarm deklariert wurden. Dieser Graph 420 stellt somit die Wahrscheinlichkeit (1-POD) dar. Zur Deklaration wird ein Schwellenwert genutzt, wobei ein erster niedriger Schwellenwert (z.B. bei 30%) einen Voralarm und ein zweiter höherer Schwellenwert (z.B. bei 70%) einen Alarm auslöst. Wenn der Schwellenwert gleich null wäre (linke Seite der Darstellung), würden alle Objekten einen Alarm auslösen. Dadurch triggern alle ungefährlichen Objekte einen Alarm/Voralarm. Mit einem Anstieg des Schwellenwertes fällt die FAR (siehe erster Graph 410) und der Wert für die Wahrscheinlichkeit (1- POD) (zweiter Graph 420) steigt an. Ein Schwellenwert von 100 (in Prozent des Wertebereiches der Sensorsignale) bedeutet, dass alle Objekte als nichtbedrohlich deklariert werden. Mit fallendem Schwellenwert gibt es immer weniger gefährliche Objekte, für die keine Warnung erfolgt (siehe zweiten Graph 420).

Je höher Deklarationsschwelle liegt, desto geringen ist die Falschalarmrate. Gleichzeit erhöht sich aber auch die Wahrscheinlichkeit, dass eine tatsächliche Bedrohung fälschlicherweise als ein Falschalarm interpretiert wird und daher unterdrückt werden würde. Entsprechendes gilt für den Fall, wenn die Deklarationsschwelle zu niedrig gewählt wird, was zu sehr vielen Falschalarmen führt - allerdings aber mit einer hohen Wahrscheinlichkeit eine tatsächliche Bedrohung meldet.

Wenn die möglichen Gegenmaßnahmen begrenzt sind, ist es in jedem Fall vorteilhaft, hohe Falschalarmraten zu vermeiden, da ansonsten die Gefahr besteht, dass im Falle einer tatsächlichen Bedrohung keine Gegenmaßnahmen mehr zur Verfügung stehen.

Ausnahmen hiervon wären Gegenmaßnahmen, die sich nicht verbrauchen, wie beispielsweise sogenannte DIRCM (direct infrared counter measures). Wird ein Träger durch solche Systeme geschützt, kann bei einem Flugkörperwarner zugunsten der Warnzeit oder zugunsten der POD auch eine höhere Falschalarmrate akzeptiert werden. Dies kann beispielsweise durch geeignete Vorwarnungen berücksichtigt werden. Bei einer niedrigen Deklarationsschwelle werden bei solchen Vorwarnungen eine geringere Deklarationszeit und/oder eine höhere POD bei höherer FAR erreicht.

Neben der Erkennung von Beschuss, z.B. durch Raketen, können Flugkörperwarner auch für die Erkennung von feindlichem Beschuss mit nichtangetriebenen Projektilen (HFI: Hostal Fire Indication) verwendet werden. Hierbei wird je nach Spektralbereich der Mündungsblitz, die heiße Kugel oder bei Leuchtspurmunition die Leuchtspur detektiert.

Ein bekanntes System ist beispielsweise in US 3,653,016 offenbart, das eine Kombination eines breitbandigen Solarzellendetektors mit einem UV-sensitiven Detektor durch eine serielle Verschaltung kombiniert, sodass eine Bestätigung eines zuvor durch den Solarzellendetektor detektierten Ereignisses ermöglicht wird. Jedoch sind für dieses System die Ergebnisse noch nicht zufriedenstellend.

EP 2911092 A1 offenbart ein Verfahren umfassend: Speichern einer Sequenz von hochauflösenden Bildern einer Szene in einem Puffer; Erhalten von Strahlungsemissionsablesungen von einem oder mehreren Fotodetektoren; Erkennen eines vermuteten Blitzereignisses basierend auf der Verarbeitung der Strahlungsemissionsablesungen von dem einen oder den mehreren Fotodetektoren, wobei das Erkennen zu einem ersten Zeitpunkt erfolgt; Abrufen von Bildern der Szene aus dem Puffer mit hoher Auflösung, einschließlich mindestens eines Bildes, das vor dem ersten Zeitpunkt aufgenommen wurde; und Verarbeiten der hochauflösenden Bilder der Szene, um eine Geolokalisierung des vermuteten Blitzereignisses zu bestimmen und / oder um zu bestimmen, ob das vermutete Blitzereignis ein Ereignis von Interesse ist oder nicht.

Daher besteht ein Bedarf nach verbesserten Systemen, die die obengenannten Probleme nicht aufweisen und ein hohen Maß an Sicherheit bieten.

### KURZBESCHREIBUNG DER ERFINDUNG

Zumindest ein Teil der obengenannten Probleme wird durch einen Flugkörperwarner nach Anspruch 1 und ein Verfahren nach Anspruch 8 gelöst. Die abhängigen Ansprüche beziehen sich auf vorteilhafte Weiterbildungen.

Die vorliegende Erfindung bezieht sich auf einen Flugkörperwarner und insbesondere auf einen passiven Flugkörperwarner. Der Flugkörperwarner umfasst einen primären Sensor, einen sekundären Sensor und eine Auswerteeinheit. Der primäre Sensor ist ausgebildet zum Detektieren eines potentiellen Flugkörpers in einem ersten Spektralbereich. Der sekundäre Sensor ist ausgebildet zum Detektieren des potentiellen Flugkörpers in einem zweiten Spektralbereich. Der erste Spektralbereich und der zweite Spektralbereich sind optional verschieden und derart gewählt, dass eine Falschalarmrate des primären Sensors geringer ist als eine Falschalarmrate des sekundären Sensors. Die Auswerteeinheit ist ausgebildet, um erste Detektionssignale von dem primären Sensorzu empfangen und nach einem Überschreiten eines Deklarationsschwellenwertes (z. B. in einem Klassifikator) ein Warnsignal (z.B. ein Voralarm) in Bezug auf den potentiellen Flugkörper zu erzeugen (oder auszugeben). Die Auswerteeinheit ist weiter ausgebildet, um zweite Detektionssignale von dem sekundären Sensor fortlaufend zu empfangen und für eine vorbestimmte Zeitdauer zu speichern und, bei Vorliegen des Warnsignals, eine Verifikation des potentiellen Flugkörpers basierend auf einer Rückverfolgung durchzuführen, wobei die Rückverfolgung eine Analyse der gespeicherten Sensorsignale des sekundären Sensors umfasst.

Es versteht sich, dass die Auswerteeinheit mehrere Komponenten aufweisen kann und zumindest teilweise Bestandteil des primären Sensors und/oder des sekundären Sensors sein kann. So kann beispielsweise ein Vergleichen mit Schwellenwerten in dem primären Sensor und/oder in dem sekundären Sensor selbst ausgeführt werden. Auch das Abspeichern von Sensorsignalen kann optional in einem der Sensoren erfolgen. Es ist jedoch ebenfalls möglich, dass das Abspeichern und die Analyse durch eine externe Einheit/Speicher durchgeführt werden.

Der Begriff "potentiell" bezieht sich insbesondere auf potentiell gefährliche Flugkörper wie beispielsweise Geschosse oder Raketen. Solche Objekte erzeugen Signale, die von weiteren Signalen (z.B. einen ortsfesten Hintergrund) zu unterscheiden sind.

Die Deklarationsschwelle bezieht sich nicht zwingend direkt auf die Intensität von Bildpunkten, die von den Sensoren erhalten werden. Vielmehr erfolgt in der Auswerteeinheit eine Analyse der detektierten Ereignisse (z.B. über der Zeit), so dass die Deklarationsschwelle sich beispielsweise auf abgeleitete Größen bezieht (z.B. wie schnell sich die Intensität von Bildpunkten mit der Zeit ändert).

Optional ist die Auswerteeinheit weiter ausgebildet, um zumindest eine der folgenden Alarmierungen auszugeben:
- eine Warnung nach einem Auslösen eines Deklarationssignals durch den primären Sensor (z.B. bei Erreichen oder Überschreiten eines Deklarationsschwellenwertes),
- einen Alarm bei einer Verifikation des Detektionsereignisses durch den sekundären Sensor,
- einen Alarm bei Erreichen einer weiteren Deklarationsschwelle, die größer ist als die Deklarationsschwellenwert der Warnung.

Das Auslösen der Warnung oder des Alarms kann unmittelbar nach dem Feststellen eines Überschreitens des Deklarationsschwellenwerte erfolgen. Die konkrete Wahl für die (weitere) Deklarationsschwelle stellt ein Optimierungsproblem dar, um eine niedrige Falschalarmrate mit einer hohen Zuverlässigkeit (hohe POD) zu kombinieren. Beispielsweise kann der Deklarationsschwellenwert bei 30 liegen und eine Vorwarnung (höhere FAR bei höherer POD) auslösen. Bei der weiteren Deklarationsschwelle von 70 kann beispielsweise ein Alarm (niedrigere FAR bei niedrigerer POD) ausgegeben werden.

Optional ist die Auswerteeinheit weiter ausgebildet, um in Antwort auf eine positive Verifikation einen Alarm nur dann auszugeben, wenn das von dem primären Sensor empfangene Signal für eine bestimmte Zeitdauer oberhalb des ersten Schwellenwertes bleibt.

Der primäre Sensor ist weiter ausgebildet, um beim Detektieren des potentiellen Flugkörpers ebenfalls eine Position (in dem Detektionsbild) des potentiellen Flugkörpers (z.B. dessen Koordinaten und/oder dessen Richtung/Winkelbereich) zu erfassen und an die Auswerteeinheit weiterzugeben. Unter einer Position soll im Folgenden insbesondere immer auch die Position in dem detektierten Bild verstanden werden und nicht zwingenderweise die drei globalen Raumkoordinaten. Da der Sensor in eine bestimmte Richtung "schaut" definiert diese Position im Allgemeinen immer eine bestimmte Richtung.

Die Auswerteeinheit ist weiter ausgebildet, um die gespeicherten Sensorsignale des Sekundärsensors für einen lokalen Bereich um die detektierte Position (in dem erfassten Bild) herum zu analysieren. Hierunter soll insbesondere eine Ortsfilterung verstanden sein, sodass lediglich Bereiche analysiert werden, die in der näheren Umgebung der detektierten Position sind. Der sekundäre Sensor kann ebenfalls für alle Kandidatenflugkörper eine Orts- oder Richtungserfassung durchführen und basierend auf der übermittelten Position aus den Kandidaten ein Objekt auswählen, für den die Rückverfolgung der Daten erfolgt.

Optional ist die Auswerteeinheit weiter ausgebildet, um Sensorsignale des sekundären Sensors, die außerhalb der vorbestimmten Zeitdauer liegen, zu löschen. Die vorbestimmte Zeitdauer hängt von einer zu erwartenden Flugzeitdauer des potentiellen Flugkörpers zu einem Objekt, das durch den Flugkörperwarner zu warnen ist, ab. So kann die vorbestimmte Zeitdauer beispielsweise in einem Bereich zwischen 10 Sekunden und 60 Sekunden oder zwischen 15 Sekunden und 50 Sekunden liegen oder ungefähr 20 Sekunden oder ungefähr 30 Sekunden betragen. Wie allgemein üblich soll unter dem Begriff "Löschen" nicht zwingenderweise das physikalische Löschen verstanden werden, sondern nur eine Freigabe zum Überschreiben des entsprechenden Datenbereiches. Die angegebenen Zeitbereiche verstehen sich lediglich beispielhaft. Es versteht sich, dass der Zeitbereich insbesondere einstellbar ist und an die konkreten Gegebenheiten und an zu erwartende Flugkörper bzw. deren Geschwindigkeit angepasst werden kann.

Optional ist die Auswerteeinheit weiter ausgebildet, um eine Klassifizierung eines durch den primären Sensor detektierten potentiellen Flugkörpers durchzuführen, wobei die Klassifizierung basierend auf ein Maß eines Überschreitens eines Attributs (z.B. einer Intensitätsverteilung) des Deklarationsschwellwertes basiert und eine Wahrscheinlichkeit eines Nichtvorliegens eines Fehlalarms anzeigt.

Ein potentiell gefährlicher Flugkörper hat eine bestimmte Flugkörpersignatur und die Auswerteeinheit kann weiter ausgebildet sein, um bei der Analyse zumindest Abschnitte der durch den sekundären Sensor empfangenen zweiten Sensorsignale mit der bestimmten Flugkörpersignatur zu vergleichen, um den Flugkörper als potentiell gefährlich einzustufen (z. B. als Teil der Klassifizierung).

Die Auswerteeinheit ist weiter ausgebildet, um die Rückverfolgung zeitlich bis zu einem möglichen Abschussereignis (Launch) durchzuführen. Das Abschussereignis ist ein zeitlich lokalisiertes Maximum in den Sensordaten (z.B. ein erstes explosionsartiges, starkes Signal von der jeweiligen Position). Das Abschussereignis kann aber auch - innerhalb der Rückverfolgungszeitdauer - das erste detektierte Signal von dem jeweiligen Bildbereich sein (es muss kein lokalisiertes Maximum sein).

Optional hat der sekundäre Sensor eine größere Reichweite als der primäre Sensor.

Der erste Spektralbereich des primären Sensors liegt im ultravioletten Bereich, sodass er für solare Signale nicht sensitiv ist. Aufgrund der atmosphärischen Absorption ist die Reichweite dieses Sensors jedoch begrenzt. Aufgrund des Nichtvorhandenseins von Bildhintergrund ist die Detektion der Bedrohung leichter was zu einer niedrigen FAR führt. Der zweite Spektralbereich des sekundären Sensors umfasst zumindest eine der folgenden Spektralbereiche: sichtbarer Spektralbereich, nahes Infrarot (z.B. Wellenlängen zwischen 800 nm und 3 µm) oder mittleres Infrarot (z.B. Wellenlängen zwischen 3 µm und 50 µm). Diese Spektralbereiche sind dadurch gekennzeichnet, dass die atmosphärische Dämpfung gering ist und dadurch eine große Reichweite erzielt werden kann. Aufgrund der hintergrundbehafteten Bildinformationen führt die jedoch zu einer erhöhten FAR.

Die Auswerteeinheit ist weiter ausgebildet, um nur solche erfassten Sensorsignale von dem sekundären Sensor zu speichern, die oberhalb eines weiteren Schwellenwertes liegen. Diese Signale können außerdem fortlaufend komprimiert und als komprimierte Bilddaten abgespeichert werden. Der primäre Sensor und/oder der sekundäre Sensor sind optional ausgebildet, um eine lokale oder globale Segmentierung in Echtzeit durchzuführen und nur Objektdaten an die Auswerteeinheit zu übertragen.

Die vorliegende Erfindung bezieht sich auch auf ein Verfahren zum Warnen vor einem Flugkörper. Das Verfahren umfasst die Schritte:
- Detektieren eines potentiellen Flugkörpers durch einen primären Sensor unter Nutzung von ersten Sensorsignalen in einem ersten Spektralbereich, wobei das Detektieren ein Vergleichen der ersten Sensorsignale mit einem Schwellenwert und, nach einem Überschreiten des Schwellenwertes, ein Erzeugen eines Warnsignals vor dem potentiellen Flugkörper umfasst,
- Detektieren des potentiellen Flugkörpers durch einen sekundären Sensor unter Nutzung von zweiten Sensorsignalen in einem zweiten Spektralbereich, wobei die zweiten Sensorsignalen fortlaufend von dem sekundären Sensor empfangen und für eine vorbestimmte Zeitdauer gespeichert werden und eine Falschalarmrate des primären Sensors geringer ist als eine Falschalarmrate des sekundären Sensors; und
- Verifizieren des potentiellen Flugkörpers bei Vorliegen des Warnsignals basierend auf einer Rückverfolgung, die eine Analyse der gespeicherten Sensorsignale des sekundären Sensors umfasst,
wobei das Warnsignal triggert, die Rückverfolgung zu starten, wobei nur solche erfassten Detektionssignale von dem sekundären Sensor zu speichern, die oberhalb eines weiteren Schwellenwertes liegen, wobei der primäre Sensor weiter ausgebildet ist, um beim Detektieren eine Position oder eine Richtung des potentiellen Flugkörpers zu erfassen und an die Auswerteeinheit weiterzugeben und wobei die Auswerteeinheit ausgebildet ist, um die gespeicherten zweiten Detektionssignale für einen Bereich um die Position oder der Richtung herum zu analysieren, wobei der erste Spektralbereich des primären Sensors im ultravioletten Bereich liegt, der für solare Signale nicht sensitiv ist, und der zweite Spektralbereich des sekundären Sensors zumindest eine der folgenden Spektralbereiche umfasst: sichtbarer Spektralbereich, nahes Infrarot oder mittleres Infrarot oder langes Infrarot.

Optional umfassen die Schritte des Detektierens ein Erfassen von ersten und zweiten Sensorsignalen, die von dem Flugkörper erzeugt werden. Es handelt sich also insbesondere um eine Flugkörperwarnung, wo keine Signale ausgesendet zu werden brauchen (passive Warner). Eventuell vorhandene Filter filtern den dabei zu erwartenden Wellenlängenbereich.

### KURZBESCHREIBUNG DER FIGUREN

Die Ausführungsbeispiele der vorliegenden Erfindung werden besser verstanden von der folgenden detaillierten Beschreibung und den beiliegenden Zeichnungen, die jedoch nicht so verstanden werden sollten, dass sie die Offenbarung auf die spezifischen Ausführungsformen einschränken, sondern lediglich der Erklärung und dem Verständnis dienen.
- Fig. 1: zeigt einen Flugkörperwarner gemäß einem Ausführungsbeispiel der vorliegenden Erfindung.
- Fig. 2: zeigt zur Veranschaulichung von Ausführungsbeispielen einen Signalverlauf im Primär- und Sekundärsensor und typische Bildinformationen von Primär- und Sekundärsensor.
- Fig. 3A,3B: zeigen Flussdiagramme für ein Verfahren zum Detektieren eines potentiellen Flugkörpers gemäß Ausführungsbeispielen der vorliegenden Erfindung.
- Fig. 4: zeigt einen schematischen Zusammenhang zwischen FAR und POD.

### DETAILLIERTE BESCHREIBUNG

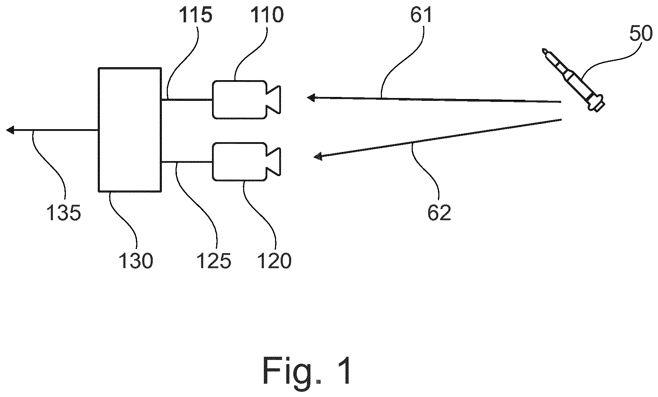

Fig. 1 zeigt ein Ausführungsbeispiel für einen Flugkörperwarner gemäß einem Ausführungsbeispiel der vorliegenden Erfindung. Der Flugkörperwarner umfasst einen primären Sensor 110, einen sekundären Sensor 120 und eine Auswerteeinheit 130. Der primäre Sensor 110 ist ausgebildet zum Detektieren eines potentiellen Flugkörpers 50 unter Nutzung von ersten Sensorsignalen 61 in einem ersten Spektralbereich. Der sekundäre Sensor 120 ist ausgebildet zum Detektieren des potentiellen Flugkörpers 50 unter Nutzung von zweiten Sensorsignalen 62 in einem zweiten Spektralbereich, wobei der erste Spektralbereich und der zweite Spektralbereich derart gewählt sind, dass eine Falschalarmrate des und Reichweite primären Sensors 110 geringer ist als eine Falschalarmrate des und Reichweite sekundären Sensors 120. Die Auswerteeinheit 130 ist ausgebildet:
- um erste Detektionssignale 115 von dem primären Sensor 110 zu empfangen und mit einem Schwellenwert S1 zu vergleichen und nach einem Überschreiten des Schwellenwertes S1 ein Warnsignal von dem potentiellen Flugkörper 50 zu erzeugen,
- um zweite Detektionssignale 125 von dem sekundären Sensor 120 fortlaufend zu empfangen und für eine vorbestimmte Zeitdauer zu speichern,
- um bei Vorliegen des Warnsignals eine Verifikation des potentiellen Flugkörpers 50 basierend auf einer Rückverfolgung durchzuführen, wobei die Rückverfolgung eine Analyse der gespeicherten Sensorsignale des sekundären Sensors 120 umfasst. Optional braucht in der Rückverfolgung nur ein kleiner räumlicher Bereich um die vom Primärsensor gemeldete Position untersucht zu werden. Aus diesem Grund kann - verglichen mit der konventionell genutzten Detektionsschwelle für die Auswertung des gesamten Bildes - eine geringere Detektionsschwelle gewählt werden, da im Beobachtungsbereich weniger Quellen enthalten sind als im gesamten Bild.

Ausführungsbeispiele beziehen sich insbesondere auf passive Flugkörperwarner, die als primäre und sekundäre Sensoren 110, 120 optische Sensoren wie beispielsweise Kameras nutzen. Die in Frage kommenden Kameras arbeiten in zwei Wellenlängenbereichen, die unterschiedliche Vor- und Nachteile bei der Erkennung von Bedrohungen bieten. Zum Beispiel kommen in Betracht:
- SBLTV (solar blind UV): Kameras/Sensoren für den ultravioletten (UV) Bereich, die für Sonnenlicht unempfindlich sind;
- MWIR (mid wave Infra Red): Kameras/Sensoren für das mittlere Infrarot.

Die für Solarlicht unempfindlichen SBUV-Sensoren arbeiten in einem Spektralbereich, in welchem von der Sonne kommende Strahlung in der Atmosphäre absorbiert wird. Aus diesem Grund erhält man Bilder, die außer sehr heißen Objekten, wie Feuer, Halogenlampen, Flugkörper, etc., keine weitere Bildinformationen enthalten. Eine Detektion dieser Quellen ist daher sehr einfach möglich.

Da nur sehr heiße Objekte detektiert werden und keine Sonnenreflexe existieren, ist die Anzahl der im Klassifikator (Teil der Auswerteeinheit 130) zu verarbeitenden Quellen sehr gering. Bei der Ausgestaltung des Flugkörperwarners ist zu beachten, dass die abgestrahlte Intensität des Flugkörpertriebwerks in diesem Wellenlängenbereich sehr gering und die atmosphärische Dämpfung groß ist. Aufgrund diesen beiden Eigenschaften ist die Reichweite eines UV-basierten Flugkörperwarners beschränkt. Für die größte Bedrohung von fliegenden Gerät (z.B. schultergefeuerte Luftabwehr-Raketen) ist die Zeit zwischen der Warnung und dem potentiellen Treffer (Warnzeit) allerdings ausreichend, um entsprechende Gegenmaßnahmen durchzuführen. Diese Sensoren sind insbesondere für den primären Sensor 110 geeignet, da sie eine geringe FAR und eine hohe POD besitzen.

Das mittlere Infrarot (MWIR) ist der zweite übliche Spektralbereich, der in optischen Flugkörperwarnern zum Einsatz kommt. Die Verwendung dieses Spektralbereichs bietet den prinzipiellen Vorteil, dass die Reichweite aufgrund der guten atmosphärischen Transmission und hohen Intensität des Abgasstrahls sehr groß ist. Bei der Ausgestaltung des Flugkörperwarners ist hierbei zu beachten, dass bei diesen Wellenlängen sowohl Reflexionen und Streuungen von Sonnenlicht an Umgebungsstrukturen beobachtet werden, wie auch die thermische Eigenstrahlung von Objekten erfasst wird. Aufgrund des strukturierten Hintergrunds (Clutter) ist daher die Detektion der heißen Triebwerksabgase des Flugkörpers 50 sehr viel schwerer möglich als im SBUV. Es sind daher im Allgemeinen sehr viele Objekte zu verfolgen und im Klassifikator (Auswerteeinheit) hinsichtlich deren Bedrohungspotential zu bewerten, was zu einer erhöhten FAR führen kann. Um die Gesamtzahl der zu verfolgenden Objekte 50 in einem handhabbaren Bereich zu halten, wird muss die Schwelle S1 bei der Detektion der Objekte im Bild entsprechend hoch gesetzt. Dies führt aber auf der anderen Seite zu einer Verringerung der Reichweite, sodass sich dadurch der oben genannte Vorteil der größeren Reichweite wieder relativieren kann.

Um die detektierte Objektzahl weiter zu reduzieren, können zweifarbige MWIR Systeme eingesetzt. Hierbei werden verschiedene Spektralbereiche erfasst und die zusätzlichen spektralen Informationen zur weiteren Unterdrückung des Hintergrunds genutzt.

Die MWIR-Kameras (z.B. für den sekundären Sensor 120) erlauben dadurch eine Erkennung von feindlichen Beschuss (z.B. von nichtangetriebenen Projektilen), wobei sowohl Leuchtspur wie auch Nicht-Leuchtspurmunition durch die Erwärmung der Kugel im Flug erkannt werden können. Ebenso kann ein Mündungsblitz zuverlässig detektiert werden.

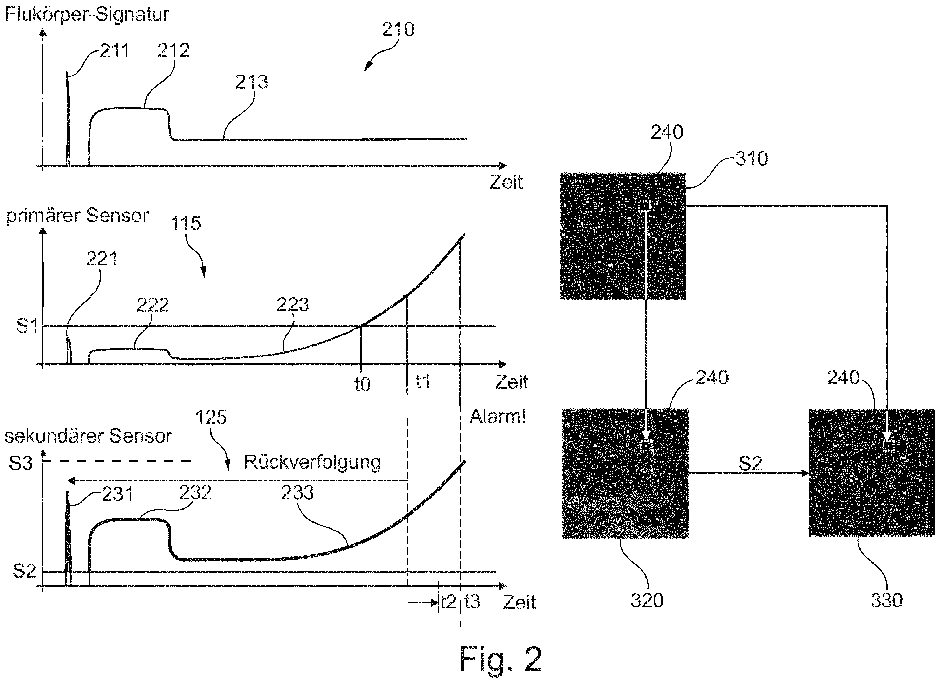

**Fig. 2** veranschaulicht weitere Details eines Ausführungsbeispiels der vorliegenden Erfindung. In der Fig. 2 ist oben beispielhaft eine schematische Flugkörpersignatur 210 für einen potentiell gefährlichen Flugkörper 50 als Funktion der Zeit dargestellt.

Dieser Flugkörper 50 wird durch den primären Sensor 110 (siehe erste Detektionssignale 115) und den sekundären Sensor 120 (siehe zweite Detektionssignale 125) zumindest teilweise erfasst.

Die Flugkörpersignatur 210 kann beispielsweise ein durch den Flugkörper 50 erzeugtes optisches Signal sein, das im sichtbaren, im IR- oder im UV-Spektralbereich erfassbar ist. Die Flugkörpersignatur 210 umfasst zunächst ein Abschusssignal 211, welches beispielsweise bei einem Start einer Rakete oder einem Abschuss des Flugkörpers erzeugt wird. Daran anschließend folgt ein Beschleunigungssignal 212 (sogenannter Booster-Abschnitt), das einer Beschleunigungsphase des Flugkörpers entsprechen kann und mit einer erhöhten Intensität der erzeugten Strahlung verbunden ist. Schließlich zeigt die Flugkörpersignatur 210 einen Flugsignal 213 (ein sogenannter Sustainer-Signal), der über die normale Flugzeit erzeugt wird. Es sind somit Charakteristika, die durch die verschiedenen Flugphasen des Flugkörpers wie beispielsweise das Ausstoßen aus dem Abschussrohr oder die Beschleunigungsphase erzeugt werden, gezeigt.

In der Mitte ist das von dem primären Sensor 110 detektierte erste Detektionssignal 115 dargestellt. Das primäre Detektionssignal 115 umfasst ebenfalls zunächst einen Abschusssignal 221. Daran anschließend folgt wiederum das Beschleunigungssignal 222 und schließlich das Flugsignal 223. Das Flugsignal 223 verstärkt sich mit der Zeit, da der potentiell gefährliche Flugkörper sich annähert und somit das Signal deutlicher wahrnehmbar wird. Es sind die gleichen oben genannten charaktristischen Signaturabschnitte. Im beispielhaft dargestellten Fall liegt das Signal zunächst unter der Detektionsschwelle. Durch den sich annähernden Flugkörper steigt das Signal an und erreich schließlich bei to die Detektionsschwelle.

Im unteren Abschnitt der Fig. 2 ist das zweite Detektionssignal 125 dargestellt, welches durch den sekundären Sensors 120 erfasst oder erzeugt wird. Auch das zweite Sensorsignal 125 umfasst die charaktristischen Signale der oben genannten einzelnen Flugabschnitte (ein Abschusssignal 231, ein Beschleunigungssignal 232 und ein Flugssignal 233, welches sich wiederum mit der Zeit verstärkt, da sich der Flugkörper 50 sich mit der Zeit annähert und daher ein stärkeres Signal liefert). In dieser Abbildung sind zwei Schwellen S2, S3 eingezeichnet. Die höhere Schwelle S3 käme zum Einsatz wenn der Sensor als reiner Flugkörperwarnsensor betrieben würde. Aufgrund des Bildhintergrunds wird diese Schwelle S3 soweit angehoben werden, dass die Anzahl der, durch einen Tracker, zu verfolgenden Objekte einen bestimmten Wert nicht überschreitet, um die Prozessorlast und die FAR auf einem akzeptablen Niveau zu halten. Die niedrigere Schwelle S2 ergibt sich, wenn nur ein kleiner Bereich um die Position des vom primären Sensor ermittelten Voralarms im Bildinhalt des sekundären Sensors untersucht wird. Aufgrund des eingeschränkten Bildbereichs bleibt auch die Anzahl an zu verfolgenden Objekten begrenzt was bei gleicher unveränderter Schwelle zu einer niedrigeren Prozessorlast und einer geringeren FAR bzw. bei zu einer möglichen Absenkung der Schwelle führt. Durch das Absenken der Schwelle von S3 auf S2 können auch weiter entfernt liegende (in der Signatur frühere) Signaturcharakteristika beobachtet werden was zu einer weiteren Verbesserung der FAR und POD führen kann.

Gemäß Ausführungsbeispielen zeichnet der sekundäre Sensor 120 fortlaufend Bildinformationen oder Sensorsignale auf, die oberhalb eines sekundären Schwellenwertes S2 liegen. Dieses Aufzeichnen wird über einen Zeitraum erfolgen, der der maximal zu erwartenden Flugzeitdauer des bedrohenden Flugkörpers entspricht. Daran anschließend können die von dem sekundären Sensor erfassten zweiten Sensorsignale wieder gelöscht bzw. durch neue Sensorsignale fortlaufend überschrieben werden.

Der primäre Sensor 110 wird durch einen ersten Detektionsschwellenwert S1 getriggert, der definiert, bei welchem Wert das erste Detektionssignal 115 erzeugt werden soll. Ein Überschreiten des ersten Detektionsschwellenwert S1 erfolgt beispielweise zum Zeitpunkt to. Wird im Weiteren die Deklarationsschwelle D überschritten, kann beispielhaft zu einem Zeitpunkt t1 eine Warnung bzw. ein Voralarm ausgegeben werden. Dieser Voralarm triggert den sekundären Sensor 120, die Rückverfolgung zu starten. Dazu kann der primäre Sensor 110 zum Zeitpunkt t1 ein entsprechendes Signal ausgeben.

Diese Abfolge kann natürlich auch durch die Auswerte- oder Steuereinheit 130 veranlasst und gesteuert werden. So kann die Auswerteeinheit 130 zunächst die Bild- oder Detektionssignale 125 des sekundären Sensors 120 speichern. Wenn auch der sekundäre Sensor 120 zum Zeitpunkt t1 ein potentielles Detektionsereignis festgestellt hat, d.h. eine Detektionssignal oberhalb des zweiten Schwellenwertes S2 liegt, kann die Rückverfolgung gestartet werden.

Wenn die Detektionssignale 115, 125 eine gleiche Quelle haben (den potentiellen Flugkörper 50), sollten die Charakteristika synchronisiert sein. Dies kann bei einer Rückverfolgung festgestellt werden und zur Verifizierung genutzt werden. Aufgrund der größeren Reichweite des sekundären Sensors können diese Charakteristika nun weiter in die Vergangenheit untersucht werden was die Qualität des Alarms (FAR) gegenüber der des reinen Primärsensors verbessert. Diese Analyse kann zu einem Zeitpunkt t2 abgeschlossen sein, sodass zum Zeitpunkt t2 eine Bestätigung der Warnung des primären Sensors 110 durch den sekundären Sensor 120 vorliegt. Dadurch, dass die Daten des Sekundärsensors 120 zum Zeitpunkt t1 bereits vorliegen, kann sofort nach t1 mit der Auswertung dieser Daten begonnen werden. Im Vergleich hierzu müsste ein konventioneller Ssensor zunächst mit seiner Bildwiederholfrequenz weiter Daten aufzeichnen, um aus diesen zum Zeitpunkt t3 den Voralarm zu bestätigen bzw. zu verwerfen. Dadurch kann es bei der Verwendung des Sekundärsensors gemäß Ausführungsbeispielen zu einer früheren Bestätigung oder Verwerfung des Voralarms kommen (Zeitpunkt t2).

Auf der rechten Seite der Fig. 2 ist beispielhaft ein Bild 310 des primären Sensors 110 dargestellt, welches ein Detektionsereignis 240 bildlich darstellt. Das Detektionsereignis 240 wird zunächst bei Überschreiten des primären Schwellenwertes S1 als Detektion durch den primären Sensor 110 erfasst (Zeitpunkt to). Beim Erreichen des Deklarationsschwellenwerts D stellt das Detektionsereignis 240 einen Kandidaten für eine potentielle Bedrohung dar (Zeitpunkt 11). Um dies zu bestätigen, wird die Rückverfolgung durch den sekundären Sensor 120 veranlasst. Wie bereits erwähnt wird dies durch die Auswerteinheit 130 oder durch die Sensoren 110, 120 selbst durchgeführt.

Das Bild 320 zeigt die durch den sekundären Sensor 120 erfassten Bildinformationen, die neben dem Ereignis 240 eine Vielzahl weiteren Quellen umfasst. Unter Nutzung des zweiten Schwellenwertes S2 kann eine Filterung vorgenommen werden, deren Ergebnis in dem Bild 330 dargestellt ist. Viele der dort sichtbaren hellen Punkten gehören jedoch zu Falschalarmquellen (z.B. permante Lichter, Reflexionen oder unbewegliche Objekte), die durch die Einschränkung des Beobachtungsbereichs auf eine lokale Umgebung um den gemeldeten Voralarm des Primärsensors verworfen werden können, wenn der primäre Sensor 110 den Ort des Ereignisses 240 übermittelt.

Da der primäre und sekundäre Sensor 110, 120 unterschiedliche Spektralbereiche nutzen, können die Sensorsignale prinzipiell verschieden voneinander sein - auch wenn im Allgemeinen eine Korrelation zwischen den beiden Signalen bestehen wird. Der primäre und der sekundäre Sensor 110,120 können, wie bereits gesagt, zwei Kameras sein, die für unterschiedliche Spektralbereiche sensitiv sind. Auf diese Weise können die Vorteile der verschiedenen spektralen Bänder genutzt werden, um eine einfache Detektion und eine geringe Fehlalarmrate mit einer großen Reichweite zu kombinieren.

Vorteilhafterweise filtert der primäre Sensor 110 das Hintergrundsignal heraus, sodass damit bereits eine geringe Falschalarmrate vorliegt. Der primäre Sensor 110 wird wie ein klassischer Flugkörperwarner betrieben, jedoch mit reduzierter Deklarationsschwelle für eine frühere Warnung. Auf der anderen Seite hat der sekundäre Sensor 120 vorteilhafterweise eine größere Reichweite und kann beispielsweise im sichtbaren Spektralbereich (VIS) oder im nahen Infrarotbereich (NIR) oder mittleren Infrarotbereich (MWIR) oder im langwelligen Infrarot (LWIR) sensitiv sein. Detektoren im VIS und NIR-Spektralbereich sind ungekühlt verwendbar. Wegen der deutlichen Miniaturisierung dieser Sensoren, könnten diese Sensoren in bestehenden Flukörperwarnsensoren integriert werden.

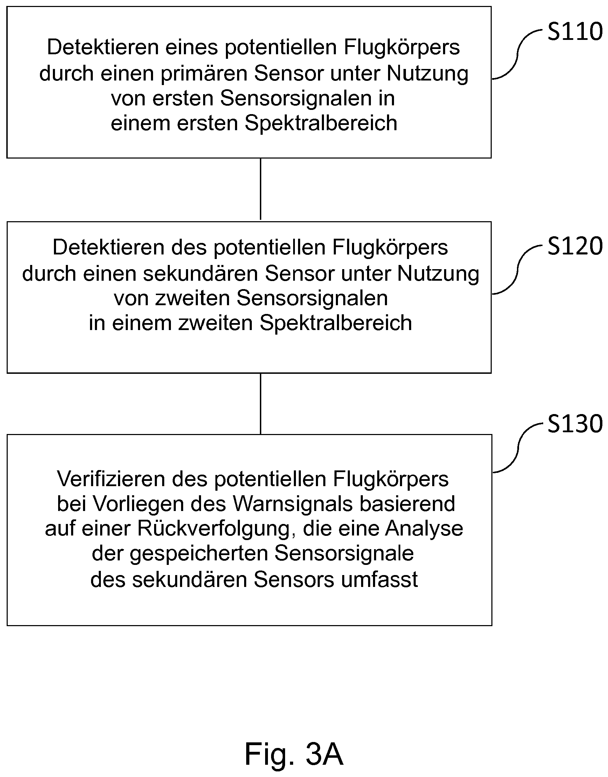

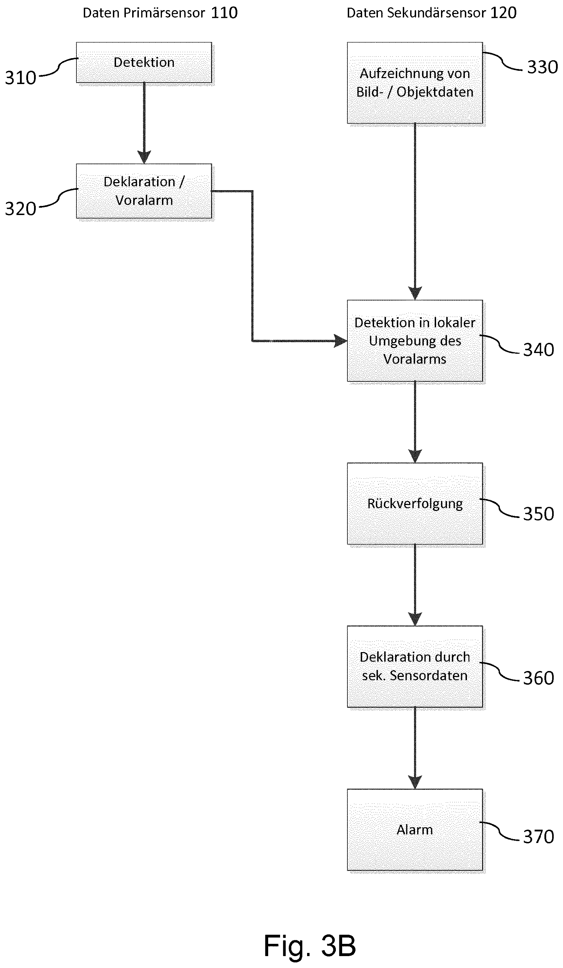

**Fig. 3A** zeigt ein Flussdiagramm für ein Verfahren zum Warnen vor einem Flugkörper 50 und Fig. 3B zeigt ein Flussdiagramm mit weiteren vorteilhaften Schritten. Das Verfahren umfasst die Schritte:
- Detektieren S110, 310 eines potentiellen Flugkörpers 50 durch einen primären Sensor 110 unter Nutzung von ersten Sensorsignalen 61 in einem ersten Spektralbereich (Schritt 310), wobei das Detektieren ein Vergleichen der ersten Sensorsignale 61 mit einem Schwellenwert S1 und nach einem Überschreiten eines Deklarationsschwellenwertes ein Erzeugen eines Warnsignals vor dem potentiellen Flugkörper 50 umfasst(Schritt 320),
- Optional kann ein gleichzeitige, rollierendes Aufzeichnen der zweiten Sensorsignale 62 in einem zweiten Spektralbereich erfolgen (Schritt 330), wobei die zweiten Sensorsignale 62 fortlaufend von dem sekundären Sensor 120 empfangen und für eine vorbestimmte Zeitdauer gespeichert,
- Detektieren S120 des potentiellen Flugkörpers 50 in einer lokal eingegrenzten Umgebung um die vom primären Sensor gemeldeten Position in den aufgezeichneten Daten des sekundären Sensors (Schritt 340),
- Verifizieren S130 des potentiellen Flugkörpers 50 bei Vorliegen des Warnsignals basierend auf einer Rückverfolgung (Schritt 350), die eine Analyse der gespeicherten Sensorsignale des sekundären Sensors 120 umfasst (Schritt 360).
- Optional kann eine Ausgabe des Alarms erfolgen (Schritt 370).

Alle zuvor beschriebenen Funktionen können auch als weitere Verfahrensschritte implementiert sein. So umfasst das Verfahren nach Ausführungsbeispielen zumindest einen Teil des folgenden Ablaufs einer Detektion und einer Deklaration von Flugkörpern (wobei ein zuvor definierter Hybridsensor zum Einsatz kommen kann):
1. Detektion des Flugkörpers 50 durch den primären Sensor 110.
2. Bildung einer Spur im primären Sensor 110.
3. Klassifikation der Spur als Alarm oder Voralarm (wobei ein Voralarm ein Alarm mit einer reduzierten Deklarationsschwelle und somit mit einer höheren Fehleralarmrate ist).
4. Übergabe der Alarmkoordinaten oder Voralarmkoordinaten an den sekundären Sensor 120.
5. Zeitliche Rückverfolgung des Objektes 50 in den aufgezeichneten Daten des sekundären Sensors 120. Der vorhandene Hintergrund im Bild des sekundären Sensors 120 spielt dabei keine große Bedeutung, da die Startposition des Objektes 240 durch die Koordinaten des primären Sensors 110 bekannt sind und dadurch nicht das gesamte Sehfeld des sekundären Sensors 120 nach dem relevanten Objekt 240 durchsucht wird. Stattdessen reicht es aus, das Objekt 240 in einem bestimmten Bereich zu suchen, der durch die Genauigkeit der Alarmposition - bis auf ein eventuell zu beachtenden Einbaufehler des primären Sensors 110 und des sekundären Sensors 120 - gegeben ist.
6. Aufgrund der größeren Reichweite des sekundären Sensors 120 kann das relevante Objekt 240 in der Zeit deutlich weiter zurückverfolgt werden, sodass unter Umständen charakteristische Merkmale sichtbar werden, die beispielsweise das Abschuss-Ereignis 211 oder den Beschleunigungsabschnitt 212 umfassen. Damit wird eine exakte Klassifikation ermöglicht. Insbesondere wird die Klassifikation besser sein, als sie durch die Daten des primären Sensors 110 allein möglich wäre.
7. Da die Daten für die Rückverfolgung zum Zeitpunkt der Übergabe t2 vom primären Sensor 110 bereits vorliegen und nicht mehr mit der Bildwiderholrate weiter aufgebaut werden müssten, kann im Falle eines Voralarms die Rückverfolgung und die Klassifikation deutlich schneller erfolgen als bei der Klassifikation des primären Sensors 110. Im Vergleich zu einer Lösung mit nur einem Sensor führt dies zu einer früheren Alarmierung, bei gleichbleibender oder niedrigerer Falschalarmrate.

Im Falle eines Bildausschnitts mit einem schwachen Hintergrund (Clutter), wie es beispielsweise bei Luft/Luft-Szenarien am Himmel der Fall ist, kann auch der sekundäre Sensor 120 als Flugkörperwarner betrieben werden. Verglichen mit dem primären Sensor 110, wird dadurch eine deutlich größere Reichweite erreicht.

Ausführungsbeispiele bieten insbesondere die folgenden Vorteile:
- Im Falle einer niedrigeren Deklarationsschwelle D1 des Primärsensors 110 führt dieses Verfahren zu einer Verbesserung der Deklarationswahrscheinlichkeit bei gleichbleibender FAR.
- Im Falle einer gleichbleibenden Deklarationsschwelle D im Primärsensor 110 ließe sich bei gleichbleibender Deklarationswahrscheinlichkeit die FAR reduzieren.
- Aufgrund der größeren Reichweite des Sekundärsensors 120 lässt sich das Objekt (der Flugkörper 50) unter Umständen bis zum Abschusszeitpunkt 211 zurückverfolgen. Dadurch ist der genaue Standpunkt des Schützen bekannt und kann bei Kenntnis der Terraindaten auf einer Landkarte angegeben werden (Georeferenzierung des Abschussortes).
- Bei der Kenntnis des Abschussortes kann unter der Annahme eines Geschwindigkeitsprofils des Flugkörpers die Zeit bis zum potentiellen Treffer abgeschätzt werden (Time to Impact TTI).
- Im Falle der Verwendung eines Voralarms kann eine Verbesserung der Warnzeit erreicht werden, wenn die Daten des Sekundärsensors 120 entsprechend schnell ausgewertet werden können und der Voralarm schneller bestätigt wird, als dies durch den Primärsensor 110 geschehen könnte.
- Durch die größere Reichweite des Sekundärsensors 120 könnte dieser ebenfalls genutzt werden, um bei Beschuss mit nichtangetriebenen Projektilen die POD zu erhöhen bzw. die Falschalarmrate zu reduzieren. Dies ist beispielsweise der Fall, wenn in den unterschiedlichen Spektralbereichen der beiden Sensoren unterschiedliche Charakteristika der Signaturen sichtbar sind oder aufgrund von unterschiedlichen Reichweiten mehr Charakteristika erkennbar sind.
- Im Falle von HFI wären auch ein Vertauschen der Rollen der beiden Sensor 110, 120 denkbar für den Fall, dass der sekundäre Sensor geeigneter für die Detektion wäre, was aber nicht unter dem Wortlaut der beanspruchten Erfindung fällt. Der Sekundärsensor 120 wäre dann für die primäre Erkennung und Deklaration von Feindbeschuss verantwortlich, während der Primärsensor die Aufgabe der Verifikation des HFI-Alarms/Voralarms übernähme.
- Wird der Sekundärsensor 120 parallel auch als vollwertiger Flugkörperwarner mit eigenem Tracker und Klassifikator betrieben, erreicht das System für Szenarien mit wenig Hintergrund die volle Reichweite des Sekundärsensors 120.
- Für den Sekundärsensor 120 muss nicht zwangsläufig eine MWIR-Sensor eingesetzt werden, der gegenüber anderen hintergrundbehafteten Wellenlängenbereichen (VIS, NIR, kurzwelliges Infrarot (SWIR)) einen Vorteil bezüglich des Signal/Hintergrund-Verhältnisses (SBR: Signal/Background Ratio) liefert. Bei einem Single-Sensor-Flugkörperwarner ist ein hohes Signal-/Hintergrundsignal-Verhältnis notwendig, um das relevante Objekt im gesamten Sehfeld finden zu können. Da bei diesem Ansatz die Position der Bedrohung bekannt ist, kann mit einem deutlich geringeren SBR gearbeitet werden. Für den Sekundärsensor 120 kommen daher auch kostengünstigere und von der Bauform kleinere Sensoren für den VIS- und NIR-Bereich in Frage. Da diese Sensoren im Vergleich zu MWIR-Sensoren keine kryogene Kühlung benötigen entfällt auch die Notwendigkeit von Kühlmaschinen, die - bedingt durch ihre bewegte Mechanik - Einschränkungen bezüglich Lebensdauer und Einsatz unter rauen Umgebungsbedingungen haben.
- Die Reichweite des Hybridsensors kann aufgrund der niedrigeren Detektionsschwelle des Sekundärsensors 120 größer sein als für einen eigenständigen Flugkörperwarner, der im gleichen Wellenlängenbereich arbeitet wie der Sekundärsensor 120. Dieser müsste aufgrund der notwendigen Reduktion der Objektzahl mit einer höheren Detektionsschwelle betrieben werden, was zu Lasten der Reichweite geht.

### BEZUGSZEICHENLISTE

- 50: potentieller Flugkörper
- 61,62: Sensorsignale unterschiedlicher Spektralbereiche
- 110: primärer Sensor
- 115: erste Detektionssignale
- 120: sekundärer Sensor
- 125: zweite Detektionssignale
- 130: Auswerteeinheit
- 135: Alarm
- 210: Flugkörpersignatur
- 211: Abschusssignal
- 212: Beschleunigungssignal
- 213: Flugsignal
- 221, 222, 223: primäre Sensorsignale der Flugkörpersignatur
- 231, 232, 233: sekundäre Sensorsignale der Flugkörpersignatur
- S1, S2, S3: Schwellenwerte
- 240: Bilddarstellung eines potentiell gefährlichen Flugkörpers

## Patentansprüche

1. Flugkörperwarner, insbesondere passiver Flugkörperwarner, mit:
einem primären Sensor (110) zum Detektieren eines potentiellen Flugkörpers (50) in einem ersten Spektralbereich;
einem sekundären Sensor (120) zum Detektieren des potentiellen Flugkörpers (50) in einem zweiten Spektralbereich;
einer Auswerteeinheit (130), die ausgebildet ist:
- um erste Detektionssignale (115) von dem primären Sensor (110) zu empfangen und nach einem Überschreiten eines Deklarationsschwellwerts ein Warnsignal von dem potentiellen Flugkörper (50) zu erzeugen,
- um zweite Detektionssignale (125) von dem sekundären Sensor (120) fortlaufend zu empfangen und für eine vorbestimmte Zeitdauer zu speichern, wobei die vorbestimmte Zeitdauer von einer zu erwartenden Flugzeitdauer des potentiellen Flugkörpers (50) zu einem Objekt, das durch den Flugkörperwarner zu warnen ist, abhängt,
- um bei Vorliegen des Warnsignals eine Verifikation des potentiellen Flugkörpers (50) basierend auf einer Rückverfolgung durchzuführen, wobei das Warnsignal die Auswerteeinheit triggert, die Rückverfolgung zu starten und wobei die Rückverfolgung eine Analyse der gespeicherten Sensorsignale des sekundären Sensors (120) umfasst und zeitlich bis zu einem möglichen Abschussereignis (231) durchgeführt wird, wobei das Abschussereignis (231) ein zeitlich lokalisiertes Maximum in den Sensordaten (230) oder ein frühestmögliches Sensorsignal innerhalb der Rückverfolgung ist,
wobei die Auswerteeinheit (130) ausgebildet ist, um nur solche erfassten Detektionssignale (125) von dem sekundären Sensor (120) zu speichern, die oberhalb eines weiteren Schwellenwertes (S2) liegen,
wobei der primäre Sensor (110) weiter ausgebildet ist, um beim Detektieren eine Position oder eine Richtung des potentiellen Flugkörpers (50) zu erfassen und an die Auswerteeinheit (130) weiterzugeben und wobei die Auswerteeinheit (130) ausgebildet ist, um die gespeicherten zweiten Detektionssignale (125) für einen Bereich um die Position oder der Richtung herum zu analysieren,
wobei der erste Spektralbereich des primären Sensors (110) im ultravioletten Bereich liegt, der für solare Signale nicht sensitiv ist, und der zweite Spektralbereich des sekundären Sensors (120) zumindest eine der folgenden Spektralbereiche umfasst: sichtbarer Spektralbereich, nahes Infrarot oder mittleres Infrarot oder langes Infrarot.

2. Flugkörperwarner nach einem der vorhergehenden Ansprüche, wobei die Auswerteeinheit (130) weiter ausgebildet ist, um zumindest eine der folgenden Alarmierungen auszugeben:
eine Warnung nach einem Auslösen eines Deklarationssignals durch den primären Sensor (110) bei Erreichen des Deklarationsschwellwertes;
einen Alarm (135) bei einer Verifikation der Warnung durch den sekundären Sensor (120);
einen Alarm (135) bei Erreichen einer weiteren Deklarationsschwelle für das erste Detektionssignal (115), wobei die weitere Deklarationsschwelle größer ist als der die Deklarationsschwelle der Warnung.

3. Flugkörperwarner nach einem der vorhergehenden Ansprüche,
wobei die Auswerteeinheit (130) weiter ausgebildet ist, um Detektionssignale (125) des sekundären Sensors (120), die außerhalb der vorbestimmten Zeitdauer liegen, zu löschen,
wobei die vorbestimmte Zeitdauer in einem Bereich zwischen 10 Sekunden und 60 Sekunden oder zwischen 15 Sekunden und 50 Sekunden liegt oder ungefähr 20 Sekunden oder ungefähr 30 Sekunden beträgt.

4. Flugkörperwarner nach einem der vorhergehenden Ansprüche, wobei die Auswerteeinheit (130) weiter ausgebildet ist, um eine Klassifizierung eines durch den primären Sensor (110) detektierten potentiellen Flugkörper (50) durchzuführen und/oder eine Wahrscheinlichkeit eines Nichtvorliegens eines Fehlalarms anzuzeigen.

5. Flugkörperwarner nach einem der vorhergehenden Ansprüche, wobei ein potentiell gefährlicher Flugkörper (50) eine bestimmte Flugkörpersignatur (210) aufweist und die Auswerteeinheit (130) weiter ausgebildet ist, um bei der Analyse zumindest Abschnitte der durch den sekundären Sensor (120) empfangenen zweiten Sensorsignale (62) mit der bestimmten Flugkörpersignatur (210) zu vergleichen, um den Flugkörper (50) als potentiell gefährlich einzustufen.

6. Flugkörperwarner nach einem der vorhergehenden Ansprüche, wobei der sekundäre Sensor (120) eine größere Reichweite aufweist als der primäre Sensor (110).

7. Flugkörperwarner nach einem der vorhergehenden Ansprüche,
wobei die Auswerteeinheit (130) ausgebildet ist, um erfasst Detektionssignale (125) fortlaufend zu komprimieren und als komprimierte Bilddaten abzuspeichern, und
wobei der primäre Sensor (110) und/oder der sekundäre Sensor (120) ausgebildet sind, um eine lokale oder globale Segmentierung in Echtzeit durchzuführen und nur Objektdaten an die Auswerteeinheit (130) zu übertragen.

8. Verfahren zum Warnen vor einem Flugkörper (50), mit folgenden Schritten:
Detektieren (S110) eines potentiellen Flugkörpers (50) durch einen primären Sensor (110) unter Nutzung von ersten Sensorsignalen (61) in einem ersten Spektralbereich und nach einem Überschreiten des Deklarationsschwellenwertes ein Erzeugen eines Warnsignals vor dem potentiellen Flugkörper (50) umfasst,
Detektieren (S120) des potentiellen Flugkörpers (50) durch einen sekundären Sensor (120) unter Nutzung von zweiten Sensorsignalen (62) in einem zweiten Spektralbereich, wobei die zweiten Sensorsignalen (62) fortlaufend von dem sekundären Sensor (120) empfangen und für eine vorbestimmte Zeitdauer gespeichert werden, wobei die vorbestimmte Zeitdauer von einer zu erwartenden Flugzeitdauer des potentiellen Flugkörpers (50) zu einem Objekt, das durch den Flugkörperwarner zu warnen ist, abhängt; und
Verifizieren (S130) des potentiellen Flugkörpers (50) bei Vorliegen des Warnsignals basierend auf einer Rückverfolgung, die eine Analyse der gespeicherten Sensorsignale des sekundären Sensors (120) umfasst,
wobei die Rückverfolgung zeitlich bis zu einem möglichen Abschussereignis (231) durchgeführt wird, wobei das Abschussereignis (231) ein zeitlich lokalisiertes Maximum in den Sensordaten (230) oder ein frühestmögliches Sensorsignal innerhalb der Rückverfolgung ist, wobei das Warnsignal triggert, die Rückverfolgung zu starten
wobei nur solche erfassten Detektionssignale (125) von dem sekundären Sensor (120) zu speichern, die oberhalb eines weiteren Schwellenwertes (S2) liegen,
wobei der primäre Sensor (110) weiter ausgebildet ist, um beim Detektieren eine Position oder eine Richtung des potentiellen Flugkörpers (50) zu erfassen und an die Auswerteeinheit (130) weiterzugeben und wobei die Auswerteeinheit (130) ausgebildet ist, um die gespeicherten zweiten Detektionssignale (125) für einen Bereich um die Position oder der Richtung herum zu analysieren,
wobei der erste Spektralbereich des primären Sensors (110) im ultravioletten Bereich liegt, der für solare Signale nicht sensitiv ist, und der zweite Spektralbereich des sekundären Sensors (120) zumindest eine der folgenden Spektralbereiche umfasst: sichtbarer Spektralbereich, nahes Infrarot oder mittleres Infrarot oder langes Infrarot.

9. Verfahren nach Anspruch 8, wobei die Schritte des Detektierens (S110, S120) eine Erfassung von ersten und zweiten Sensorsignalen (61, 62) umfasst, die von dem Flugkörper (50) erzeugt werden.

## Claims

1. A missile detector, in particular a passive missile detector, comprising:
a primary sensor (110) for detecting a potential missile (50) in a first spectral range;
a secondary sensor (120) for detecting the potential missile (50) in a second spectral range;
an evaluation unit (130) configured to:
- receive first detection signals (115) from the primary sensor (110) and to generate a warning signal from the potential missile (50) after a declaration threshold value has been exceeded,
- continuously receive second detection signals (125) from the secondary sensor (120) and to store said second detection signals for a predetermined period of time, wherein the predetermined time period depends on an expected flight time period of the potential missile (50) to an object to be warned by the missile detector,
- perform a verification of the potential missile (50) based on a tracking when the warning signal is present, the warning signal triggering the evaluation unit to initiate the tracking, and the tracking comprising an analysis of the stored sensor signals of the secondary sensor (120) and being performed in time up to a possible firing event (231), the firing event (231) being a temporally localized maximum in the sensor data (230) or an earliest possible sensor signal within the tracking,
wherein the evaluation unit (130) is designed to store only those detected detection signals (125) from the secondary sensor (120) which are above a further threshold value (S2),
wherein the primary sensor (110) is further configured to detect a position or direction of the potential missile (50) during detection and to pass it to the evaluation unit (130) and wherein the evaluation unit (130) is configured to analyze the stored second detection signals (125) for a region around the position or direction,
wherein the first spectral range of the primary sensor (110) is in the ultraviolet range that is not sensitive to solar signals, and the second spectral range of the secondary sensor (120) comprises at least one of the following spectral ranges: visible spectral range, near infrared or medium infrared or long infrared.

2. The missile detector according to any of the preceding claims, wherein the evaluation unit (130) is further configured to output at least one of the following alarms:
warning after triggering a declaration signal by the primary sensor (110) upon reaching the declaration threshold value;
an alarm (135) upon verification of the alert by the secondary sensor (120);
an alarm (135) upon reaching a further declaration threshold for the first detection signal (115), wherein the further declaration threshold is greater than the declaration threshold of the warning.

3. The missile detector according to any of the preceding claims,
wherein the evaluation unit (130) is further configured to delete detection signals (125) of the secondary sensor (120) that are outside the predetermined time period,
wherein the predetermined time period is in a range between 10 seconds and 60 seconds, or between 15 seconds and 50 seconds, or is approximately 20 seconds or approximately 30 seconds.

4. The missile detector according to any of the preceding claims, wherein the evaluation unit (130) is further configured to perform a classification of a potential missile (50) detected by the primary sensor (110) and/or to indicate a probability of a failure of a false alarm.

5. A missile detector according to any of the preceding claims, wherein a potentially dangerous missile (50) has a certain missile signature (210), and the evaluation unit (130) is further designed to compare at least portions of the second sensor signals (62) received by the secondary sensor (120) during the analysis to the determined missile signature (210) in order to classify the missile (50) as potentially dangerous.

6. A missile detector according to any one of the preceding claims, wherein the secondary sensor (120) has a greater range than the primary sensor (110).

7. The missile detector according to any of the preceding claims,
wherein the evaluation unit (130) is designed to compress detected detection signals (125) continuously and to store them as compressed image data, and
wherein the primary sensor (110) and/or the secondary sensor (120) are configured to perform local or global segmentation in real time and transmit only object data to the evaluation unit (130).

8. A method for warning of a missile (50), the method comprising:
Detecting (S110) a potential missile (50) by a primary sensor (110) using first sensor signals (61) in a first spectral range and after exceeding the declaration threshold value, generating a warning signal in front of the potential missile (50),
Detecting (S120) the potential missile (50) by a secondary sensor (120) using second sensor signals (62) in a second spectral range, wherein the second sensor signals (62) are received continuously by the secondary sensor (120) and stored for a predetermined period of time, wherein the predetermined time period depends on an expected flight time period of the potential missile (50) to an object to be warned by the missile detector, and
Verifying (S130) the potential missile (50) in the presence of the warning signal based on a tracking comprising an analysis of the stored sensor signals of the secondary sensor (120),
wherein the tracking is performed over time to a possible firing event (231), wherein the firing event (231) is a temporally localized maximum in the sensor data (230) or an earliest possible sensor signal within the tracking, the warning signal triggering the initiation of the tracking,
wherein only those detected detection signals (125) from the secondary sensor (120) are stored which are above a further threshold value (S2),
wherein the primary sensor (110) is further configured to detect a position or direction of the potential missile (50) during detection and to pass it to the evaluation unit (130) and wherein the evaluation unit (130) is configured to analyze the stored second detection signals (125) for a region around the position or direction,
wherein the first spectral range of the primary sensor (110) is in the ultraviolet range that is not sensitive to solar signals, and the second spectral range of the secondary sensor (120) comprises at least one of the following spectral ranges: visible spectral range, near infrared or medium infrared or long infrared.

9. The method of claim 8, wherein the steps of detecting (S110, S120) comprise sensing first and second sensor signals (61, 62) generated by the missile (50).

## Revendications

1. Avertisseur missile, en particulier avertisseur missile passif, comportant :
un capteur primaire (110) pour la détection d'un missile potentiel (50) dans un premier domaine spectral ;
un capteur secondaire (120) pour la détection du missile potentiel (50) dans un second domaine spectral ;
une unité d'évaluation (130), laquelle est conçue :
- pour recevoir des premiers signaux de détection (115) du capteur primaire (110) et pour générer, après le dépassement d'une valeur seuil de déclaration, un signal d'avertissement du missile potentiel (50),
- pour recevoir en continu des seconds signaux de détection (125) du capteur secondaire (120) et pour les enregistrer pendant une durée prédéterminée, la durée prédéterminée dépendant d'une durée de vol prévue du missile potentiel (50) vers un objet qui doit être averti par l'avertisseur missile,
- pour, lors de la présence du signal d'avertissement, exécuter une vérification du missile potentiel (50) sur la base d'un traçage, le signal d'avertissement déclenchant l'unité d'évaluation (130) pour commencer le traçage, et le traçage comprenant une analyse des signaux de capteur du capteur secondaire (120) enregistrés et étant exécuté dans le temps jusqu'à un événement de lancement (231) possible, l'événement de lancement (231) étant un maximum localisé dans le temps dans les données du capteur (230) ou un signal de capteur le plus précoce possible dans le cadre du traçage,
l'unité d'évaluation (130) étant conçue pour enregistrer uniquement de tels signaux de détection (125) détectés du capteur secondaire (120) qui se situent au-dessus d'une autre valeur seuil (S2),
le capteur primaire (110) étant en outre conçu pour, lors de la détection, détecter et transmettre à l'unité d'évaluation (130) une position ou une direction du missile potentiel (50), l'unité d'évaluation (130) étant conçue pour analyser les seconds signaux de détection (125) enregistrés pour une zone autour de la position ou de la direction,
le premier domaine spectral du capteur primaire (110) étant situé dans le domaine ultraviolet qui n'est pas sensible aux signaux solaires, et le second domaine spectral du capteur secondaire (120) comprenant au moins un des domaines spectraux suivants : domaine spectral visible, l'infrarouge proche, l'infrarouge moyen ou l'infrarouge long.

2. Avertisseur missile selon l'une des revendications précédentes, l'unité d'évaluation (130) étant en outre conçue pour émettre au moins une des alertes suivantes :
un avertissement après un déclenchement d'un signal de déclaration par le capteur primaire (110) lors de l'atteinte de la valeur seuil de déclaration ;
une alarme (135) lors d'une vérification de l'avertissement par le capteur secondaire (120) ;
une alarme (135) lors de l'atteinte d'une autre valeur seuil de déclaration pour le premier signal de détection (115), l'autre valeur seuil de déclaration étant supérieure à la valeur seuil de déclaration de l'avertissement.

3. Avertisseur missile selon l'une des revendications précédentes,
l'unité d'évaluation (130) étant en outre conçue pour effacer les signaux de détection (125) du capteur secondaire (120) qui se situent en dehors de la durée prédéterminée,
la durée prédéterminée se situant dans une plage entre 10 secondes et 60 secondes ou entre 15 secondes et 50 secondes ou étant d'environ 20 secondes ou d'environ 30 secondes.

4. Avertisseur missile selon l'une des revendications précédentes, l'unité d'évaluation (130) étant conçue en outre pour exécuter une classification d'un missile potentiel (50) détecté par le capteur primaire (110) et/ou pour afficher une probabilité de l'absence d'une fausse alerte.

5. Avertisseur missile selon l'une des revendications précédentes, un missile potentiellement dangereux (50) présentant une signature de missile (210) déterminée et l'unité d'évaluation (130) étant conçue en outre pour comparer, lors de l'analyse, au moins des sections des seconds signaux de capteur (62) reçus par le capteur secondaire (120) avec la signature de missile (210) déterminée, pour classer le missile (50) comme potentiellement dangereux.

6. Avertisseur missile selon l'une des revendications précédentes, le capteur secondaire (120) présentant une plus grande portée que le capteur primaire (110).

7. Avertisseur missile selon l'une des revendications précédentes,
l'unité d'évaluation (130) étant conçue pour comprimer en continu des signaux de détection (125) détectés, et pour les enregistrer sous forme de données d'image comprimées, et
le capteur primaire (110) et/ou le capteur secondaire (120) étant conçus pour exécuter une segmentation locale ou globale en temps réel et pour ne transmettre que des données d'objet à l'unité d'évaluation (130).

8. Procédé pour l'avertissement d'un missile (50), comprenant les étapes suivantes :
la détection (S110) d'un missile potentiel (50) par un capteur primaire (110) en utilisant des premiers signaux de capteur (61) dans un premier domaine spectral et comprenant, après le dépassement de la valeur seuil de déclaration, une génération d'un signal d'avertissement du missile potentiel (50),
la détection (S120) du missile potentiel (50) par un capteur secondaire (120) en utilisant des seconds signaux de capteur (62) dans un second domaine spectral, les seconds signaux de capteur (62) étant reçus en continu par le capteur secondaire (120) et enregistrés pour une durée prédéterminée, la durée prédéterminée dépendant d'une durée de vol du missile potentiel (50) prévue vers un objet qui doit être averti par l'avertisseur missile ; et
la vérification (S130) du missile potentiel (50) lors de la présence du signal d'avertissement, sur la base d'un traçage qui comprend une analyse des signaux de capteur du capteur secondaire (120) enregistrés,
le traçage étant exécuté dans le temps jusqu'à un événement de lancement possible (231), l'événement de lancement (231) étant un maximum localisé dans le temps dans les données de capteur (230) ou un signal de capteur le plus précoce possible dans le cadre du traçage, le signal d'avertissement déclenchant le commencement du traçage,
dans lequel uniquement de tels signaux de détection (125) détectés du capteur secondaire (120) qui se situent au-dessus d'une autre valeur seuil (S2) sont enregistrés,
le capteur primaire (110) étant en outre conçu pour, lors de la détection, détecter et transmettre à l'unité d'évaluation (130) une position ou une direction du missile potentiel (50), l'unité d'évaluation (130) étant conçue pour analyser les seconds signaux de détection (125) enregistrés pour une zone autour de la position ou de la direction,
le premier domaine spectral du capteur primaire (110) étant situé dans le domaine ultraviolet qui n'est pas sensible aux signaux solaires, et le second domaine spectral du capteur secondaire (120) comprenant au moins un des domaines spectraux suivants : domaine spectral visible, l'infrarouge proche, l'infrarouge moyen ou l'infrarouge long.

9. Procédé selon la revendication 8, les étapes de détection (S110, S120) comprenant une détection de premiers et de seconds signaux de capteur (61, 62) qui sont générés par le missile (50).
